# EUROPEAN PATENT APPLICATION

(11) **EP 4 807 214 A1**
(43) Date of publication of application: **16.09.2026**
(21) Application number: 25163729.4
(22) Date of filing: 14.03.2025
(51) Int. Cl.: F16H 3/66, B60K 1/00, F16H 61/18, F16H 63/30, F16H 63/32

(54) **A TRANSMISSION ARRANGEMENT FOR A VEHICLE**

(71) Applicant: Volvo Truck Corporation, 405 08 Göteborg (SE)
(72) Inventor: HEDMAN, Anders, 442 67 MARSTRAND (SE)
(74) Representative: Kransell & Wennborg KB

(57) **Abstract**

A transmission arrangement (300) for a vehicle, comprising:
- an input component (132),
- a planetary gear system (140) comprising a sun gearwheel (141), a ring gearwheel (144), and a planet carrier (142) rotationally connected to an output component (81),
- a crawler unit (390) selectively drivingly connecting the ring gearwheel to the output component, wherein the rotational connection of a gear member (392) of the crawler unit to a stationary member (149b) causes the ring gearwheel to rotate in an opposite direction compared to the planet carrier,
- a first sleeve (146) movable between a first position and a second position, rotationally connecting the sun gearwheel to the stationary member and to the input component, respectively,
- a second sleeve (147) movable between a first position, rotationally connected to the input component, and a second position, rotationally connected to the stationary member, and
- a third sleeve (148) movable between a first position, rotationally connected to the ring gearwheel, and a second position, rotationally connected to the gear member of the crawler unit,
the second and third sleeves being mutually coaxial, rotationally interconnected, and axially displaceable relative one another.

## Description

### TECHNICAL FIELD

The disclosure relates generally to transmission arrangements. In particular aspects, the disclosure relates to a transmission arrangement for a vehicle, a powertrain, and a vehicle. The disclosure can be applied to heavy-duty vehicles, such as trucks, buses, and construction equipment, among other vehicle types. The disclosure is particularly applicable to electric vehicles. Although the disclosure may be described with respect to a particular vehicle, the disclosure is not restricted to any particular vehicle.

### BACKGROUND

In recent years, there has been a trend towards developing powertrains with at least one electric prime mover, i.e., with at least one electric motor for propulsion of the vehicle. For heavy duty vehicles propelled by electric motors, a transmission that enables a plurality of gear states, with gear ratios spanning a large range, is required to achieve startability as well as efficiency at cruising speed. For starting and crawling, the transmission needs to provide a large speed reduction, whereas at cruising speed, it is normally desirable to use as few gear meshes as possible to reduce power losses and improve driving range. It is further desirable to provide a transmission which is compact.

In view of this, there is a strive to develop improved technology relating to electric powertrains for vehicles.

### SUMMARY

According to a first aspect of the disclosure, a transmission arrangement for a vehicle is provided. The transmission arrangement comprises:
an input component configured to be drivingly connected to an electric motor,
a first planetary gear system comprising a first sun gearwheel, a first ring gearwheel, and a first planet carrier carrying a first set of planet gearwheels, wherein the first planet carrier is rotationally connected to an output component of the transmission arrangement,
a crawler unit configured to selectively drivingly connect the first ring gearwheel to the output component, wherein the rotational connection of a first gear member of the crawler unit to a stationary member of the transmission arrangement is configured to cause the first ring gearwheel to rotate in an opposite direction compared to a rotational direction of the first planet carrier,
a first sleeve movable between at least a first position, in which it rotationally connects the first sun gearwheel to the stationary member, and a second position, in which it rotationally connects the first sun gearwheel to the input component,
a second sleeve movable between at least a first position in which it is rotationally connected to the input component, and a second position in which it is rotationally connected to the stationary member, and
a third sleeve movable between at least a first position in which it is rotationally connected to the first ring gearwheel, and a second position in which it is rotationally connected to the first gear member of the crawler unit.
The second and third sleeves are mutually coaxial, rotationally interconnected, and axially displaceable relative to one another.

The first aspect may seek to provide an in at least some aspects improved transmission arrangement for a vehicle powered by an electric motor. In particular, it may seek to provide such a transmission arrangement which is compact and robust, and which provides selectable gear ratios over a large speed reduction range. A technical benefit may include a compact transmission arrangement enabling a number of selectable speed ratios, including a large speed reduction suitable for crawling. By arranging the second and third sleeves rotationally interconnected and axially displaceable relative to one another, it is possible to provide a transmission arrangement with a reduced risk of undesired locking of the gear members due to undesired simultaneous rotational connection to the stationary member. In particular, the configuration of the second and third sleeves prevents the first gear member of the crawler unit from being rotationally connected to the stationary member when the transmission is operated in a direct gear, in which both the first sun gearwheel and the first ring gearwheel are rotationally connected to the input component. The configuration of the second and third sleeves further prevents the first gear member of the crawler unit and the first ring gearwheel from being simultaneously rotationally connected to the stationary member. In comparison with a transmission without the rotationally interconnected and axially displaceable second and third sleeves, a more robust transmission and facilitated gear shifting may thereby be provided.

In the following and throughout the description, the wording "rotationally connected to" and "rotationally connect" should be interpreted such that a first component of the transmission arrangement is connected to a second component of the transmission arrangement in such a way that the components rotate in the same direction and with the same rotational speed. There may be intermediate components between the first and second components, as long as they all rotate in the same direction and with the same rotational speed. The first, second, and possible intermediate components thus rotate in the same direction and with the same rotational speed when being rotationally connected to each other. The term "rotationally connectable to" should be interpreted as "selectively connectable for common rotation with". Two or more components that are "rotationally interconnected" are rotationally connected to one another. For example, the second and third sleeves are rotationally interconnected, i.e., they are rotationally connected to each other, such as by a splined interface.

By a "driving connection" of two rotating parts is to be understood that torque can be transmitted between the parts, and that the rotational speeds of the parts are proportional. When two rotating parts are drivingly connected, torque can be transmitted between the parts. This may be achieved by two gearwheels being in meshing engagement, or by a first gearwheel being in meshing engagement with a second gearwheel, which is in turn in meshing connection with a third gearwheel, or by a first gearwheel being in meshing engagement with a second gearwheel, which is rigidly connected to a third gearwheel, which is in turn in meshing connection with a fourth gearwheel, etc. Thus, in order to be drivingly connected, it is not necessary that two rotating parts are in meshing engagement. It is sufficient that the rotation of one of the parts inevitably leads to the rotation of the other one of the parts. When two parts are drivingly connectable, they are selectively connectable such that torque can be transmitted between the parts.

Optionally in some examples, including in at least one preferred example, the transmission arrangement further comprises first and second shift assemblies configured to move the first and second sleeves, respectively, wherein the first and second shift assemblies are arranged to physically prevent simultaneous positioning of the first sleeve in its first position and of the second sleeve in its second position. A technical benefit may include the provision of a transmission in which the first sun gearwheel can never be fixed to the stationary member at the same time as either one of the first ring gearwheel and the first gear member of the crawler unit. Hence, together with the configuration of the second and third sleeves, locking of the first planetary gear system is efficiently prevented. Furthermore, prevention of locking may be achieved in a compact and robust manner by relying on physical/mechanical interaction between the first and second shift assemblies.

Optionally in some examples, including in at least one preferred example, the transmission arrangement further comprises a third shift assembly configured to move the third sleeve independently of the first and second shift assemblies. A technical benefit may include improved flexibility and reduced complexity in comparison with transmissions that rely on physical/mechanical interactions between three shift assemblies to prevent forbidden gear states.

Optionally in some examples, including in at least one preferred example, the first shift assembly comprises a first shift rod motionally connected to a first shift fork configured to move the first sleeve between its first and second positions, and the second shift assembly comprises a second shift rod motionally connected to a second shift fork configured to move the second sleeve between its first and second positions. The wording "motional connection" of two components should be interpreted such that the movement of one of the components inevitably leads to a movement of the other component. A technical benefit may include facilitated gear shifting using the first and second shift rods. The shift rods may be actuated by one or more actuators.

Optionally in some examples, including in at least one preferred example, the third shift assembly comprises a third shift rod motionally connected to a third shift fork configured to move the third sleeve between its first and second positions.

Optionally in some examples, including in at least one preferred example, the first and second shift rods are arranged to physically prevent simultaneous positioning of the first sleeve in its first position and the second sleeve in its second position. A technical benefit may include mechanical safety by preventing unintended simultaneous engagement of conflicting gear states.

Optionally in some examples, including in at least one preferred example, the first and second shift rods extend in parallel to one another. A technical benefit may include a compact transmission design with facilitated assembly and maintenance.

Optionally in some examples, including in at least one preferred example, the first and second shift forks are pivoting shift forks. Also the third shift fork may be a pivoting shift fork. The pivoting shift forks may preferably be pivotably mounted to the stationary member, such as to the transmission housing, each shift fork being configured to pivot about a respective pivot point in response to a translational movement of the respective shift fork. A technical benefit may include a relatively compact gear shifting arrangement with good precision and which is less prone to wear than a gear shifting arrangement with linear shift forks.

Optionally in some examples, including in at least one preferred example, the first and second shift rods are coaxial and have shift rod ends configured to come into contact with one another and prevent simultaneous movement of the first sleeve into its first position and of the second sleeve into its second position. A technical benefit may include that the first and second shift rods are arranged to physically prevent simultaneous rotational connection of the first and second sleeves to the stationary member. Undesired locking of the transmission may thereby be prevented.

Optionally in some examples, including in at least one preferred example, at least one of the first and second shift rods has a lateral extension configured to come into contact with a portion of the other one of the first and second shift rods and prevent simultaneous movement of the first sleeve into its first position and of the second sleeve into its second position. A technical benefit may include the possibility to physically prevent undesired movement into "forbidden" positions, resulting in undesired locking of the transmission arrangement, when the first and second shift rods are non-coaxial.

Optionally in some examples, including in at least one preferred example, the transmission arrangement further comprises an interlocking member located laterally between the first and second shift rods and being configured to restrict relative axial movement of the first and second shift rods. A technical benefit may include the physical/mechanical prevention of mis-shifts, such as simultaneous rotational connection of the first and second sleeves to the stationary member.

Optionally in some examples, including in at least one preferred example, the interlocking member is movable relative to the stationary member along a non-axial direction but not along an axial direction of the transmission arrangement. The non-axial direction may, by way of example, be a direction perpendicular to the axial direction, such as a lateral direction of the transmission arrangement. The axial direction of the transmission arrangement coincides with an axial direction of the first planetary gear system.

Optionally in some examples, including in at least one preferred example, the first shift rod is configured to push the interlocking member into a first lateral position as it moves the first sleeve into its first position, wherein the interlocking member in its first lateral position prevents the second shift rod from moving the second sleeve into its second position. A technical benefit may include precise shift interlock functionality, improving transmission safety.

Optionally in some examples, including in at least one preferred example, the second shift rod is configured to push the interlocking member into a second lateral position as it moves the second sleeve into its second position, wherein the interlocking member in its second lateral position prevents the first shift rod from moving the first sleeve into its first position. A technical benefit may include precise shift interlock functionality, improving transmission safety.

Optionally in some examples, including in at least one preferred example, at least one, preferably each one, of the first, second, and third sleeves is further movable to a neutral position. A technical benefit may include improved adaptability of the transmission for various operating conditions.

Optionally in some examples, including in at least one preferred example, the crawler unit comprises a second planetary gear system comprising a second sun gearwheel, a second ring gearwheel, and a second planet carrier carrying a second set of planet gearwheels. A technical benefit may include a compact crawler unit enabling a large speed reduction.

Optionally in some examples, including in at least one preferred example, the second planet carrier is the first gear member of the crawler unit, the second and third sleeves being configured to selectively rotationally connect the second planet carrier to the stationary member. The first ring gearwheel is hereby selectively caused to rotate in the opposite direction in comparison with the first planet carrier.

Optionally in some examples, including in at least one preferred example, the second ring gearwheel is rotationally connected to the first planet carrier, and the second sun gearwheel is rotationally connected to the first ring gearwheel. A technical benefit may include that a large rotation in the opposite direction is provided for the first ring gearwheel, which generates a large total speed reduction ratio. In addition, the second sun gearwheel can be provided with a small diameter since it will not be exposed to high torque loads.

In other examples, the second ring gearwheel may be rotationally connected to the first ring gearwheel, and the second sun gearwheel may be rotationally connected to the first planet carrier.

Optionally in some examples, including in at least one preferred example, the output component is a differential planet carrier of a differential gear set configured to distribute torque to a first drive shaft and a second drive shaft arranged coaxially with the first planetary gear system. A technical benefit may include a compact transmission arrangement suitable for an electric axle assembly, also referred to as an e-axle.

According to a second aspect of the disclosure, a powertrain for an electrically propelled vehicle is provided. The powertrain comprises an electric motor and a transmission arrangement according to the first aspect, wherein the input component of the transmission arrangement is drivingly connected or connectable to the electric motor. In some examples, the powertrain may comprise two electric motors, wherein the input component of the transmission arrangement is drivingly connected or connectable to both the electric motors. Advantages and effects of the second aspect of the disclosure are largely analogous to the advantages and effects of the first aspect of the disclosure.

According to a third aspect of the disclosure, a vehicle comprising the transmission arrangement according to the first aspect or the powertrain according to the second aspect is provided. The vehicle may be a heavy-duty vehicle such as a bus, a truck, or a construction machine. Advantages and effects of the third aspect of the disclosure are largely analogous to the advantages and effects of the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary powertrain according to an example.
**FIG. 3** illustrates an exemplary transmission arrangement according to a first example in a first gear state.
**FIG. 4** illustrates the transmission arrangement according to the first example in a second gear state.
**FIG. 5** illustrates an exemplary transmission arrangement according to a second example.
**FIG. 6** illustrates parts of an exemplary transmission arrangement according to a third example.
**FIG. 7** illustrates parts of an exemplary transmission arrangement according to a fourth example.
**FIGS. 8a****-b** illustrate parts of an exemplary transmission arrangement according to a fifth example in first and second positions, respectively.
**FIG. 9** illustrates an exemplary transmission arrangement according to a sixth example.
**FIG. 10** is an exemplary powertrain according to another example.

The drawings are schematic and not necessarily drawn to scale. Like reference characters refer to like elements throughout the description, unless expressed otherwise. Some reference characters may have been omitted in some of the drawings for clarity.

### DETAILED DESCRIPTION

The detailed description set forth below provides information and examples of the disclosed technology with sufficient detail to enable those skilled in the art to practice the disclosure.

For heavy duty vehicles propelled by electric motors, a transmission that enables a plurality of gear states, with gear ratios spanning a large range of possible speed reductions, is required to achieve startability as well as energy efficiency at cruising speed. For starting and crawling, the transmission needs to provide a large speed reduction, whereas at cruising speed, it is normally desirable to use as few gear meshes as possible to reduce power losses and improve driving range.

The present disclosure aims at providing a transmission arrangement for an electric vehicle, which is compact and which is able to provide several different gear ratios such that speed reductions suitable for starting and crawling as well as for cruising are provided. It further aims at providing such a transmission arrangement in which locking of the transmission due to mis-shift can be avoided in a robust and space-efficient manner.

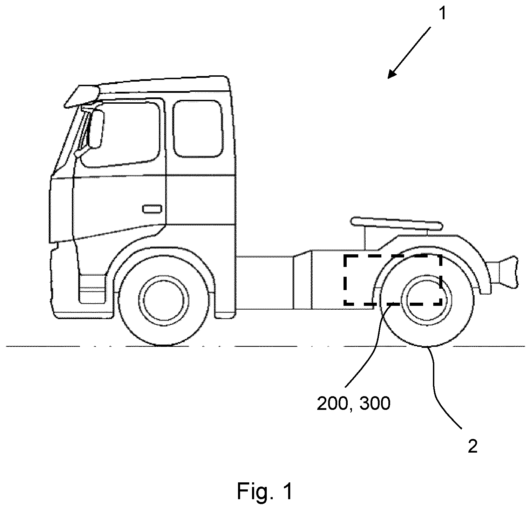

**FIG. 1** is an exemplary vehicle 1 according to an example. The vehicle 1 is herein a heavy-duty truck, and more particularly a towing truck for towing one or more trailers (not shown). It shall however be noted that the present disclosure is applicable to any other vehicle, such as any other truck, a bus, a passenger car, construction equipment, such as a wheel loader, an excavator, a dump truck etc. The vehicle 1 comprises an electric powertrain 200, comprising an electric motor configured to drive driven wheels 2 of the vehicle 1 via a transmission arrangement 300. The driven wheels 2 are in this example rear wheels of the vehicle 1. It shall however be noted that driven wheels may be provided at any other location, such as at the front of the vehicle. In other examples, driven wheels may be used for driving ground-engaging crawler members of the vehicle, e.g., of an excavator.

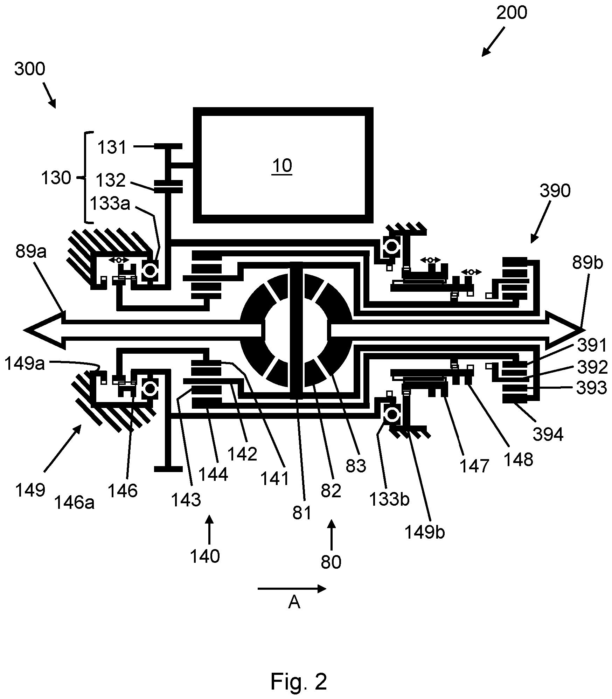

**FIG. 2** illustrates a powertrain 200 according to an example. The powertrain 200 comprises an electric motor 10 configured to deliver torque to two drive shafts 89a, 89b of a vehicle 1, each drive shaft 89a, 89b driving one of the driven wheels 2. The powertrain 200 is in the illustrated example an electric axle assembly, also referred to as an e-axle, comprising a transmission arrangement 300 according to a first example and a differential gear set 80 via which torque is distributed to the two drive shafts 89a, 89b.

The transmission arrangement 300 comprises an input gearset 130, herein comprising a small-diameter pinion 131 in meshing engagement with an input component 132 in the form of a gearwheel having a relatively large diameter. The small diameter pinion 131 is driven by an output shaft of the electric motor 10. Alternatively, a clutch may be provided for selectively drivingly connecting the pinion 131 to the electric motor. The input component 132 is mounted by rotary bearings 133a, 133b to a transmission housing 149 comprising stationary members 149a, 149b. Hence, the input component 132 is rotatable relative to the transmission housing 149.

Coaxial with the input component 132 and with the drive shafts 89a, 89b, a first planetary gear system 140 is provided. It comprises a first sun gearwheel 141, a first ring gearwheel 144, and a first planet carrier 142 carrying a first set of planet gearwheels 143 being in meshing engagement with the first sun gearwheel 141 and the first ring gearwheel 144.

The first planet carrier 142 is rotationally connected to an output component 81 in the form of a differential planet carrier 81 of the differential gear set 80. The differential gear set 80 further comprises a set of differential planet gearwheels 82 and two differential output gearwheels 83 rotationally connected to the drive shafts 89a, 89b, respectively.

A crawler unit 390 in the form of a second planetary gear system 390 is also arranged coaxial with the input component 132 and the drive shafts 89a, 89b. The crawler unit 390 comprises a plurality of gear members, such as a second sun gearwheel 391, a second ring gearwheel 394, and a second planet carrier 392 carrying a second set of planet gearwheels 393. The second ring gearwheel 394 is rotationally connected to the first planet carrier 142, and hence also to the differential planet carrier 81. The second sun gearwheel 391 is rotationally connected to the first ring gearwheel 144. The rotational connection of the second planet carrier 392 to the stationary member 149b of the transmission housing 149 is configured to cause the first ring gearwheel 144 to rotate in an opposite direction compared to a rotational direction of the first planet carrier 142.

The transmission arrangement 200 further comprises a first sleeve 146, a second sleeve 147 and a third sleeve 148, all movable back and forth along an axial direction A of the transmission arrangement 200. Each sleeve 146, 147, 148 comprises a respective actuator interface for moving the respective sleeve 146, 147, 148. The first sleeve 146 is movable between a first position, in which it rotationally connects the first sun gearwheel 141 to the stationary member 149a, a neutral position, in which it does not rotationally connect the first sun gearwheel 141 to any other component, and a second position, in which it rotationally connects the first sun gearwheel 141 to the input component 132. Hence, in its first position, the first sleeve 146 is not in engagement with the input component 132, and in its second position, it is not in engagement with the stationary member 149a. In FIG. 2, the first sleeve 146 is in its second position, to the far right.

The second sleeve 147 is movable between a first position in which it is rotationally connected to the input component 132, a neutral position, and a second position in which it is rotationally connected to the stationary member 149b. Hence, in its first position, the second sleeve 147 is not in engagement with the stationary member 149b, and in its second position, it is not in engagement with the input component 132. In FIG. 2, the second sleeve 147 is in its second position, to the far right.

The third sleeve 148 is movable between a first position in which it is rotationally connected to the first ring gearwheel 144, a neutral position, and a second position in which it is rotationally connected to the second planet carrier 392. Hence, in its first position, the third sleeve 148 is not in engagement with the second planet carrier 392, and in its second position, it is not in engagement with the first ring gearwheel 144. In FIG. 2, the third sleeve is in its first position, to the far left.

The second sleeve 147 and the third sleeve 148 are mutually coaxial, rotationally interconnected, and axially displaceable relative to one another. A rotational interlock between the second and third sleeves 147, 148 may be achieved by a splined interface between overlapping portions of the sleeves 147, 148. In the illustrated example, the second sleeve 147 is mounted radially outside of the third sleeve 148, such that it can slide in the axial direction A on external splines provided on an external surface of the third sleeve 148. Hence, both the second and third sleeves 147, 148 are needed to rotationally connect the first ring gearwheel 144 to the stationary member 149b, as illustrated in FIG. 2, or to the input component 132. Furthermore, both the second and third sleeves 147, 148 are needed to rotationally connect the second planet carrier 392 to the stationary member 149b or to the input component 132. It is thereby impossible to rotationally connect the second planet carrier 392 to the stationary member 149b at the same time as the first ring gearwheel 144 is rotationally connected to the input component 132, since this would require the second sleeve 147 to be in simultaneous engagement with both the stationary member 149b and the input component 132. The second sleeve 147 can only be engaged with one of the stationary member 149b and the input component 132 at a time. Similarly, the third sleeve can only be engaged with one of the first ring gearwheel 144 and the second planet carrier 392 at a time.

At least four gear ratios are possible in the transmission arrangement 300 illustrated in FIG. 2, providing a successively decreasing speed reduction from a first gear to a fourth gear.

In the first gear, providing a very large speed reduction, the first sleeve 146 is moved to its second position in which it engages the first sun gearwheel 141 to the input component 132. The second sleeve 147 and the third sleeve 148 are both moved to their second positions, together rotationally connecting the second planet carrier 392 to the stationary member 149b. This will cause the second sun gearwheel 391 and the first ring gearwheel 144 to rotate in an opposite direction compared to the rotational direction of the first planet carrier 142. The first gear is suitable for starting of the vehicle 1 and for crawling at low speed.

In a second gear, providing a smaller speed reduction than the first gear, the first sleeve 146 is kept in its second position in which it engages the first sun gearwheel 141 to the input component 132. The second sleeve 147 remains in its second position and the third sleeve 148 is moved to its first position, rotationally disconnecting the second planet carrier 392 from the stationary member 149b such that it can rotate freely. The second and third sleeves 147, 148 now together rotationally connect the first ring gearwheel 144 to the stationary member 149b. As a result, the first sun gearwheel 141 drives the first planet carrier 142 via the first planet gearwheels 143. The second gear, which is illustrated in FIG. 2, is suitable for relatively low vehicle speeds.

In a third gear, providing a relatively small speed reduction, the first sleeve 146 is moved to its first position in which it rotationally connects the first sun gearwheel 141 to the stationary member 149a. The second sleeve 147 is moved to its first position and the third sleeve 148 remains in its first position, such that the second and third sleeves 147, 148 together rotationally connect the first ring gearwheel 144 to the input component 132. The second planet carrier 392 remains rotationally disconnected from the stationary member 149b. This causes the first ring gearwheel 144 to drive the first planet carrier 142 via the first planet gearwheels 143. The third gear is suitable for moderate vehicle speeds.

In the fourth gear, providing a speed reduction only over the input gearset 130, the first sleeve 146 is moved to its second position and the second sleeve 147 as well as the third sleeve 148 remain in their first positions. Hence, both the first sun gearwheel 141 and the first ring gearwheel 144 are rotationally connected to the input component 132. The first planetary gear system 140 is thereby locked in common rotation, resulting in a direct gear, with no speed reduction, across the first planetary gear system 140. The fourth gear is suitable for cruising speeds of the vehicle 1.

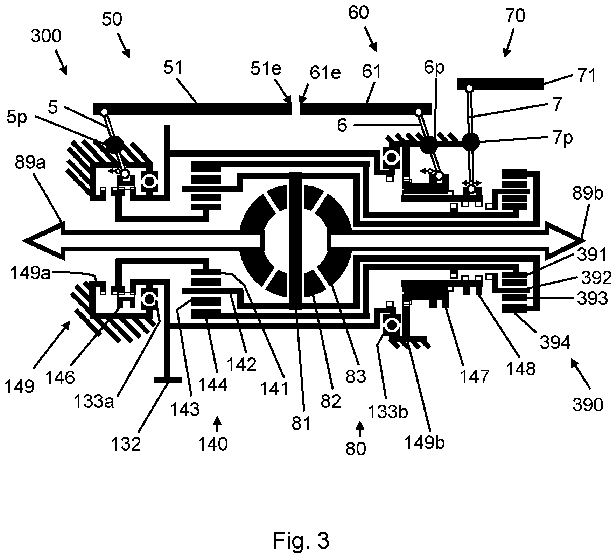

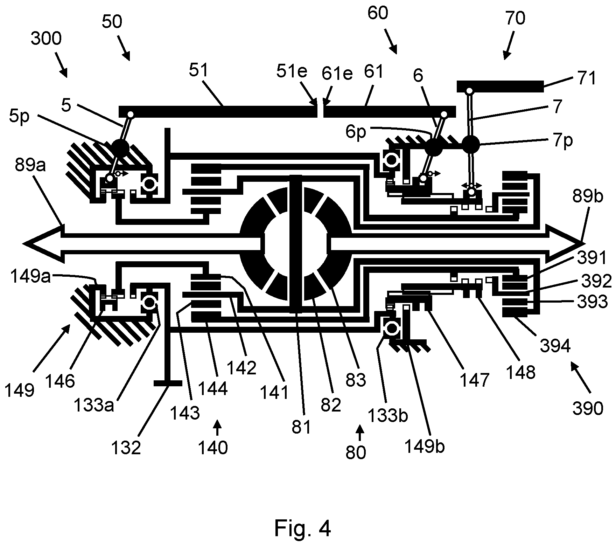

**FIGS. 3-4** illustrate the transmission arrangement 300 of the first example shown in FIG. 2 with parts of the input component 132 hidden to illustrate details of a gear shifting arrangement configured for selectively engaging a gear of the transmission arrangement 300 according to a first example embodiment. In FIG. 3, the first and second sleeves 146, 147 are in their second positions, and the third sleeve 148 is in its neutral position. In FIG. 4, the first and second sleeves 146, 147 are in their first positions and the third sleeve 148 is still in its neutral position.

The gear shifting arrangement comprises first and second shift assemblies 50, 60 configured to move the first and second sleeves 146, 147, respectively. The first and second shift assemblies 50, 60 are arranged to physically prevent simultaneous positioning of the first sleeve 146 in its first position, to the far left, and of the second sleeve 147 in its second position, to the far right. The gear shifting arrangement further comprises a third shift assembly 70 which is configured to move the third sleeve 148 independently of the first and second shift assemblies 50, 60. Hence, there is no physical/mechanical interaction between the third shift assembly 70 and any one of the first and second shift assemblies 50, 60.

In the first example illustrated in FIGS. 3-4, the first shift assembly 50 comprises a first shift rod 51 and a first shift fork 5 configured to move the first sleeve 146 between its first and second positions. The first shift rod 51 is motionally connected to the first shift fork 5. The second shift assembly 60 comprises a second shift rod 61 and a second shift fork 6 configured to move the second sleeve 147 between its first and second positions. The second shift rod 61 is motionally connected to the second shift fork 6. The third shift assembly 70 comprises a third shift rod 71 and a third shift fork 7 configured to move the third sleeve 148 between its first and second positions. The third shift rod 71 is motionally connected to the third shift fork 7.

All three shift forks 5, 6, 7 are pivoting shift forks, pivotably mounted to the transmission housing 149 at a respective pivot point 5p, 6p, 7p. A movement of the first shift rod 51 to the left will hence move the first sleeve 146 to the right, a movement of the second shift rod 61 to the left will move the second sleeve 147 to the right, and a movement of the third shift rod 71 to the left will move the third sleeve 148 to the right. The shift rods 51, 61, 71 are configured to be moved by actuators (not shown), such as pneumatic or electric actuators. Each actuator may be coaxial with the respective shift rod it is actuating, but it may also be non-coaxially arranged.

The first and second shift rods 51, 61 are configured to contact one another such that movement of the first and second sleeves 146, 147 into "forbidden" positions is prevented. In the illustrated first example, the first and second shift rods 51, 61 are coaxial, and have ends 51e, 61e configured to come into contact upon an attempt to move the second sleeve 147 into its second position whenever the first sleeve 146 is in its first position, and vice versa. This will prevent the first sun gearwheel 141 from being rotationally connected to the transmission housing 149 at the same time as the first ring gearwheel 144 or the second planet carrier 392, which would result in a non-rotatable transmission arrangement 300 in which no torque transfer would be possible.

Even though the third shift assembly 70 is herein illustrated with a pivoting shift fork 7, it may alternatively be a linear shift fork. Since the third shift assembly 70 does not need to physically/mechanically interact with the first and second shift assemblies 50, 60, its configuration may be selected according to other considerations, such as according to design constraints of the powertrain.

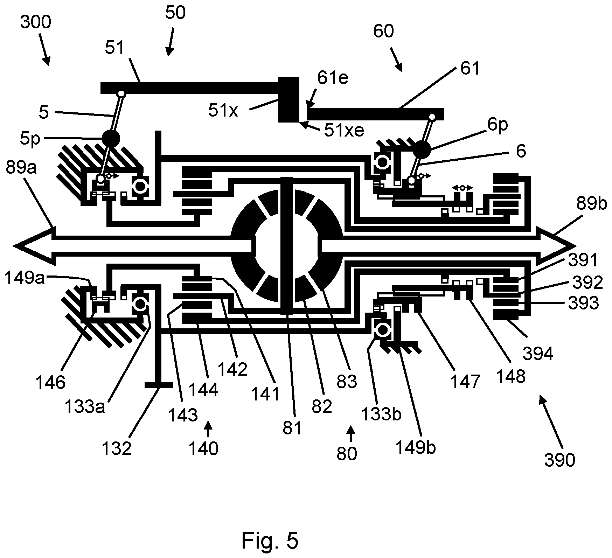

**FIG. 5** illustrates the transmission arrangement 300 according to a second example, which only differs from the first example in the configuration of the first and second shift assemblies 50, 60. The third shift assembly is not illustrated in FIG. 5. Similarly to the first example, the first and second shift assemblies 50 comprise pivotable shift forks 5, 6. However, the first and second shift rods 51, 61 differ from the first example in that they extend in parallel but not coaxially with one another. The first shift rod 51 has a lateral extension 51x with a facing end 51xe configured to come into contact with an opposing end 61e of the second shift rod 61 and thereby prevent simultaneous movement of the first sleeve 146 into its first position and of the second sleeve 147 into its second position, and vice versa. The functionality corresponds to that described with reference to FIGS. 3-4.

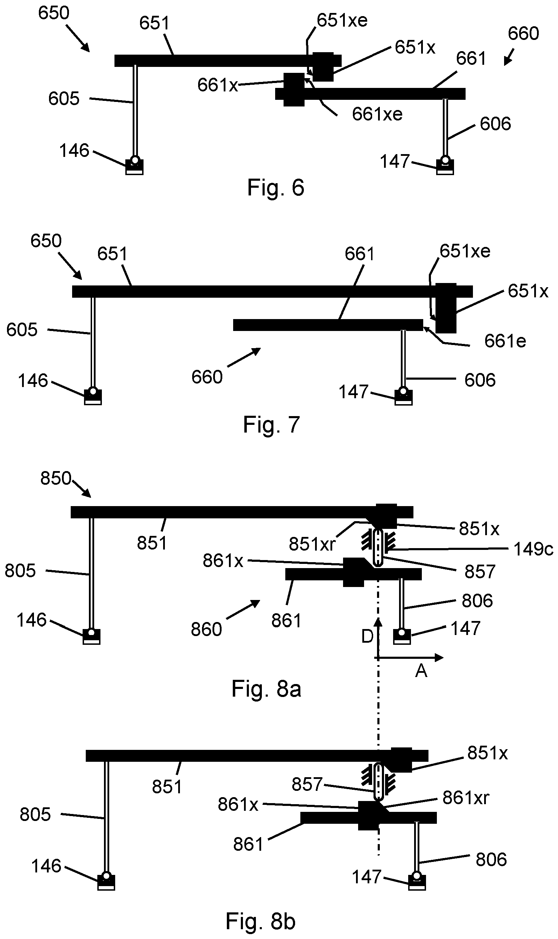

**FIG. 6** illustrates first and second gear shift assemblies 650, 660 according to a third example, that may be used in the transmission arrangement 300 illustrated in any of the previous figures 2-5. The first and second gear shift assemblies 650, 660 according to the third example differ from the first and second examples in that the first and second shift forks 605, 606 are linear (non-pivoting) shift forks configured to be translated by the first and second shift rods 651, 661, respectively. Hence, a movement of the respective shift rod 551, 561 to the right will move the respective sleeve 146, 147 to the right. The shift rods 651, 661 are parallel, but not coaxial. The first shift fork 651 comprises a first lateral extension 651x having a facing end 651xe configured to contact a facing end 661xe of a second lateral extension 661x of the second shift rod 661 upon an attempt to move the second sleeve 147 into its second position whenever the first sleeve 146 is in its first position, and vice versa. The functionality corresponds to that described with reference to FIGS. 3-4. The first and second lateral extensions 651x, 661x are both located axially between the shift forks 605, 606.

**FIG. 7** illustrates a fourth example of the first and second gear shift assemblies 650, 660, that may be used in the transmission arrangement 300 illustrated in any of the previous figures 2-5. The fourth example is similar to the third example, but differs in that only the first shift rod 651 is provided with a lateral extension 651x. The first shift rod 651 extends past the second shift rod 661 in the axial direction and the lateral extension 651x is located to the far right, i.e., to the right of both shift forks 605, 606. The lateral extension 651x has a facing end 651xe, facing to the left, configured to contact a facing end 661e of the second shift rod 661, i.e., the right end of the second shift rod 661, upon an attempt to move the second sleeve 147 into its second position whenever the first sleeve 146 is in its first position, and vice versa. The functionality corresponds to that described with reference to FIGS. 3-4.

**FIGS 8a****-b** illustrate a fifth example of the first and second gear shift assemblies 850, 860, that may be used in the transmission arrangement 300 illustrated in any of the previous figures 2-5. Similar to the third and fourth examples, the first and second shift forks 805, 806 are linear shift forks and the first and second shift rods extend in parallel but are not coaxial with one another. An interlocking member 857 in the form of an interlock pin is located laterally between the first and second shift rods 851, 861. The interlocking member 857 is configured to restrict relative axial movement of the first and second shift rods 851, 861. For this purpose, the interlocking member 857 is movable relative to a stationary member 149c of the transmission housing along a non-axial direction D but not along the axial direction A. The non-axial direction D is in the illustrated example a lateral direction perpendicular to the axial direction A. The first shift rod 851 comprises a first lateral extension 851x with a first ramping surface 851xr configured to push the interlocking member 857 into a first lateral position, close to the second shift rod 861, as it moves the first sleeve 146 into its first position. This position is illustrated in FIG. 8a. In its first lateral position, the interlocking member 857 together with the first lateral extension 851x prevent the second shift rod 861 from moving the second sleeve 147 into its second position. For this purpose, the second shift rod 861 is provided with a second lateral extension 861x configured to physically/mechanically interact with the interlocking member 857.

The second lateral extension 861x of the second shift rod 861 comprises a second ramping surface 861xr configured to push the interlocking member 857 into a second lateral position, close to the first shift rod 851, as it moves the second sleeve 147 into its second position. This position is illustrated in FIG. 8b. In its second lateral position, the interlocking member 857 together with the second lateral extension 861x prevents the first shift rod 851 from moving the first sleeve 146 into its first position.

Although the shift rods 851, 861 are herein illustrated with lateral extensions 851x, 861x, the ramping surfaces may in other examples be integrated with the shift forks, or formed as part of the shift rods, such as in the form of milled grooves or similar. The interlocking member may be in the form of an interlock pin as illustrated in FIGS. 8a-b, or in the form of a set of balls, or similar. Furthermore, although the shift forks 805, 806 are illustrated as linear shift forks, they may in other examples be pivoting shift forks similar to the ones illustrated in FIGS. 3-5, adapted for use with the interlocking member 857.

Of course, many other configurations of the gear shifting arrangement 50 are possible, apart from those illustrated in FIGS. 3-8. For example, the number and position of lateral extensions may be varied as long as the functionality described with reference to FIGS. 3-8 is achieved.

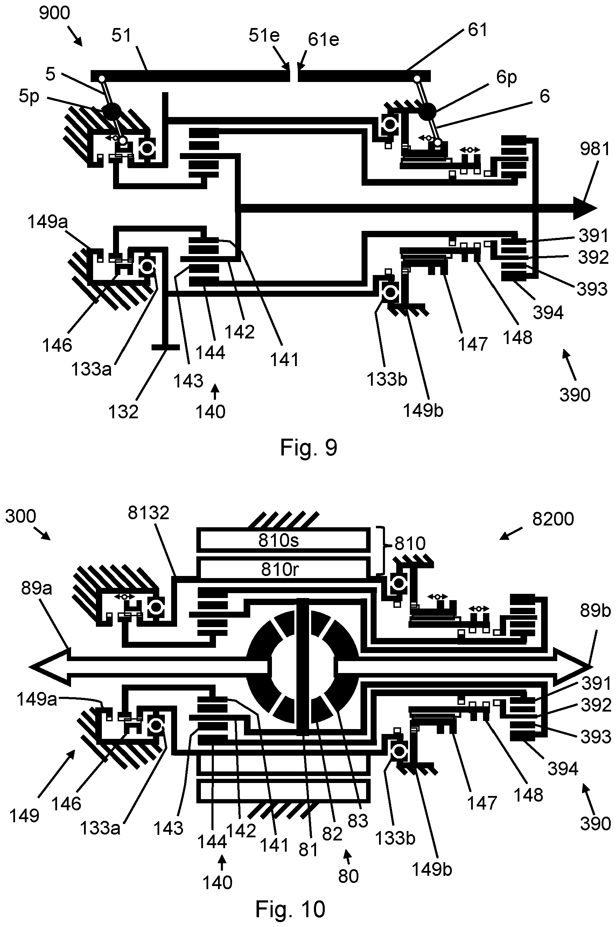

**FIG. 9** illustrates a transmission arrangement 900 according to another embodiment of the disclosure. In this embodiment, an electric motor (not shown) may be drivingly connected to the input component 132 in the same way as illustrated in FIG. 2, i.e., via a pinion and an input component 132 in the form of an input gearwheel, or in the same way as illustrated in FIG. 10 (further described below). The transmission arrangement 900 differs from the one illustrated in FIG. 3 in that the first planet carrier 142 and the second ring gearwheel 394 are rotationally connected to an output shaft 981 instead of to a differential planet carrier. The output shaft 981 is coaxial with the planetary gear systems 140, 390 and may be drivingly connectable to a pair of driven wheels 2 of the vehicle 1 as illustrated in FIG. 1, such as via a differential gear set. In some examples, the output shaft 981 may be drivingly connected to the differential gear set via a final drive, e.g., a bevel gear. The transmission arrangement 900 may hence be used in an electric powertrain which is not configured as an electric axle assembly. The gear shifting arrangement according to any one of the above-described examples may be used in the transmission arrangement 900.

**FIG. 10** illustrates a powertrain 8200 according to another embodiment, which differs from the powertrain 200 illustrated in FIG. 2 in that it comprises an electric motor 810 which is coaxial with the transmission arrangement 300, and hence with the drive shafts 89a, 89b. The electric motor 810 comprises a stator 810s, fixed to the transmission housing 149, and a rotor 810r, rotationally connected to an input component 8132 in the form of a rotatable casing in which the first planetary gear system 140 as well as the differential gear set 80 are mounted. The input component 8132 is rotatably mounted to the transmission housing 149 by rotary bearings 133a, 133b. Apart from this, the transmission arrangement 300 is identical to that described with reference to FIG. 2. The gear shifting arrangement according to any one of the example embodiments described above with reference to FIGS. 3-8 may be used in this configuration of the powertrain 8200. The powertrain 8200 may be used in the vehicle 1 illustrated in FIG. 1.

In the embodiments illustrated above, the crawler unit 390 has been described as a planetary gear system in which the second planet carrier 392 is rotationally connected to the stationary member 149b to provide the first gear. However, other configurations of the crawler unit are possible. For example, the crawler unit may comprise a planetary gear system where there is a set of meshing pairs of planet gearwheels between the ring gearwheel and the sun gearwheel, as in DE10230185A1. In such an embodiment, the ring gearwheel of the crawler unit can be selectively rotationally connectable to a stationary member of the transmission via the third sleeve in order to achieve opposite rotation of the planet carrier and the sun gearwheel in the first gear.

In the following, a list of numbered examples of the disclosure is presented.
Example 1. A transmission arrangement (300, 900) for a vehicle (1), comprising:
   - an input component (132, 8132) configured to be drivingly connected to an electric motor (10, 810),
   - a first planetary gear system (140) comprising a first sun gearwheel (141), a first ring gearwheel (144), and a first planet carrier (142) carrying a first set of planet gearwheels (143), wherein the first planet carrier (142) is rotationally connected to an output component (81, 981) of the transmission arrangement (300, 900),
   - a crawler unit (390) configured to selectively drivingly connect the first ring gearwheel (144) to the output component (81, 981), wherein the rotational connection of a first gear member (392) of the crawler unit (390) to a stationary member (149a, 149b) of the transmission arrangement (300, 900) is configured to cause the first ring gearwheel (144) to rotate in an opposite direction compared to a rotational direction of the first planet carrier (142),
   - a first sleeve (146) movable between at least a first position, in which it rotationally connects the first sun gearwheel (141) to the stationary member (149a, 149b), and a second position, in which it rotationally connects the first sun gearwheel (141) to the input component (132, 8132), and
   - a second sleeve (147) movable between at least a first position in which it is rotationally connected to the input component (132, 8132), and a second position in which it is rotationally connected to the stationary member (149a, 149b), and
   - a third sleeve (148) movable between at least a first position in which it is rotationally connected to the first ring gearwheel (144), and a second position in which it is rotationally connected to the first gear member (392) of the crawler unit (390),
   wherein the second and third sleeves (147, 148) are mutually coaxial, rotationally interconnected, and axially displaceable relative to one another.
Example 2. The transmission arrangement of example 1, further comprising first and second shift assemblies (50, 60) configured to move the first and second sleeves (146, 147), respectively, and wherein the first and second shift assemblies (50, 60) are arranged to physically prevent simultaneous positioning of the first sleeve (146) in its first position and of the second sleeve (147) in its second position.
Example 3. The transmission arrangement of example 2, further comprising a third shift assembly (70) configured to move the third sleeve (148) independently of the first and second shift assemblies (50, 60).
Example 4. The transmission arrangement of example 2 or 3, wherein the first shift assembly (50) comprises a first shift rod (51, 651, 851) motionally connected to a first shift fork (5, 605, 805) configured to move the first sleeve (146) between its first and second positions, and wherein the second shift assembly (60) comprises a second shift rod (61, 661, 861) motionally connected to a second shift fork (6, 606, 806) configured to move the second sleeve (147) between its first and second positions.
Example 5. The transmission arrangement of example 4, wherein the first and second shift rods (51, 651, 851; 61, 661, 861) are arranged to physically prevent simultaneous positioning of the first sleeve (146) in its first position and the second sleeve (147) in its second position.
Example 6. The transmission arrangement of example 4 or 5, wherein the first and second shift rods (51, 651, 851; 61, 661, 861) extend in parallel to one another.
Example 7. The transmission arrangement of any one of examples 4-6, wherein the first and second shift forks (5, 6) are pivoting shift forks.
Example 8. The transmission arrangement of example 7, wherein the first and second shift rods (51, 61) are coaxial and have shift rod ends (51e, 61e) configured to come into contact with one another and prevent simultaneous movement of the first sleeve (146) into its first position and of the second sleeve (147) into its second position.
Example 9. The transmission arrangement of any one of examples 4-7, wherein at least one of the first and second shift rods has a lateral extension (51x, 651x, 661x) configured to come into contact with a portion of the other one of the first and second shift rods and prevent simultaneous movement of the first sleeve (146) into its first position and of the second sleeve (147) into its second position.
Example 10. The transmission arrangement of any one of examples 4-7, further comprising an interlocking member (857) located laterally between the first and second shift rods (851, 861) and being configured to restrict relative axial movement of the first and second shift rods (851, 861).
Example 11. The transmission arrangement of example 10, wherein the interlocking member (857) is movable relative to the stationary member (149c) along a non-axial direction (D) but not along an axial direction (A) of the transmission arrangement (300, 900).
Example 12. The transmission arrangement of example 10 or 11, wherein the first shift rod (851) is configured to push the interlocking member (857) into a first lateral position as it moves the first sleeve (146) into its first position, wherein the interlocking member (857) in its first lateral position prevents the second shift rod (861) from moving the second sleeve (147) into its second position.
Example 13. The transmission arrangement of any one of examples 10-12, wherein the second shift rod (861) is configured to push the interlocking member (857) into a second lateral position as it moves the second sleeve (147) into its second position, wherein the interlocking member (857) in its second lateral position prevents the first shift rod (851) from moving the first sleeve (146) into its first position.
Example 14. The transmission arrangement of any one of the preceding examples, wherein at least one, preferably each one, of the first, second and third sleeves (146, 147, 148) is further movable to a neutral position.
Example 15. The transmission arrangement of any one of the preceding examples, wherein the crawler unit (390) comprises a second planetary gear system (390) comprising a second sun gearwheel (391), a second ring gearwheel (394), and a second planet carrier (392) carrying a second set of planet gearwheels (393).
Example 16. The transmission arrangement of example 15, wherein the second planet carrier (392) is the first gear member (392) of the crawler unit (390), the second and third sleeves (147, 148) being configured to selectively rotationally connect the second planet carrier (392) to the stationary member (149a, 149b).
Example 17. The transmission arrangement of example 15 or 16, wherein the second ring gearwheel (394) is rotationally connected to the first planet carrier (142), and the second sun gearwheel (391) is rotationally connected to the first ring gearwheel (144).
Example 18. The transmission arrangement of any one of the preceding examples, wherein the output component (81) is a differential planet carrier (81) of a differential gear set (80) configured to distribute torque to a first drive shaft (89a) and a second drive shaft (89b) arranged coaxially with the first planetary gear system (140).
Example 19. A powertrain (200, 8200) for an electrically propelled vehicle (1), the powertrain (200) comprising:
   - an electric motor (10), and
   - the transmission arrangement (300, 900) of any one of the preceding examples, wherein the input component (132, 8132) of the transmission arrangement is drivingly connected or connectable to the electric motor (10).
Example 20. A vehicle (1) comprising the transmission arrangement (300, 900) according to any of examples 1-18, or the powertrain (200) according to example 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A transmission arrangement (300, 900) for a vehicle (1), comprising:
- an input component (132, 8132) configured to be drivingly connected to an electric motor (10, 810),
- a first planetary gear system (140) comprising a first sun gearwheel (141), a first ring gearwheel (144), and a first planet carrier (142) carrying a first set of planet gearwheels (143), wherein the first planet carrier (142) is rotationally connected to an output component (81, 981) of the transmission arrangement (300, 900),
- a crawler unit (390) configured to selectively drivingly connect the first ring gearwheel (144) to the output component (81, 981), wherein the rotational connection of a first gear member (392) of the crawler unit (390) to a stationary member (149a, 149b) of the transmission arrangement (300, 900) is configured to cause the first ring gearwheel (144) to rotate in an opposite direction compared to a rotational direction of the first planet carrier (142),
- a first sleeve (146) movable between at least a first position, in which it rotationally connects the first sun gearwheel (141) to the stationary member (149a, 149b), and a second position, in which it rotationally connects the first sun gearwheel (141) to the input component (132, 8132), and
- a second sleeve (147) movable between at least a first position in which it is rotationally connected to the input component (132, 8132), and a second position in which it is rotationally connected to the stationary member (149a, 149b), and
- a third sleeve (148) movable between at least a first position in which it is rotationally connected to the first ring gearwheel (144), and a second position in which it is rotationally connected to the first gear member (392) of the crawler unit (390),
wherein the second and third sleeves (147, 148) are mutually coaxial, rotationally interconnected, and axially displaceable relative to one another.

2. The transmission arrangement of claim 1, further comprising first and second shift assemblies (50, 60) configured to move the first and second sleeves (146, 147), respectively, and wherein the first and second shift assemblies (50, 60) are arranged to physically prevent simultaneous positioning of the first sleeve (146) in its first position and of the second sleeve (147) in its second position.

3. The transmission arrangement of claim 2, further comprising a third shift assembly (70) configured to move the third sleeve (148) independently of the first and second shift assemblies (50, 60).

4. The transmission arrangement of claim 2 or 3, wherein the first shift assembly (50) comprises a first shift rod (51, 651, 851) motionally connected to a first shift fork (5, 605, 805) configured to move the first sleeve (146) between its first and second positions, and wherein the second shift assembly (60) comprises a second shift rod (61, 661, 861) motionally connected to a second shift fork (6, 606, 806) configured to move the second sleeve (147) between its first and second positions.

5. The transmission arrangement of claim 4, wherein the first and second shift rods (51, 651, 851; 61, 661, 861) are arranged to physically prevent simultaneous positioning of the first sleeve (146) in its first position and the second sleeve (147) in its second position.

6. The transmission arrangement of claim 4 or 5, wherein the first and second shift forks (5, 6) are pivoting shift forks.

7. The transmission arrangement of claim 6, wherein the first and second shift rods (51, 61) are coaxial and have shift rod ends (51e, 61e) configured to come into contact with one another and prevent simultaneous movement of the first sleeve (146) into its first position and of the second sleeve (147) into its second position.

8. The transmission arrangement of any one of claims 4-6, wherein at least one of the first and second shift rods has a lateral extension (51x, 651x, 661x) configured to come into contact with a portion of the other one of the first and second shift rods and prevent simultaneous movement of the first sleeve (146) into its first position and of the second sleeve (147) into its second position.

9. The transmission arrangement of any one of claims 4-6, further comprising an interlocking member (857) located laterally between the first and second shift rods (851, 861) and being configured to restrict relative axial movement of the first and second shift rods (851, 861).

10. The transmission arrangement of claim 9, wherein the interlocking member (857) is movable relative to the stationary member (149c) along a non-axial direction (D) but not along an axial direction (A) of the transmission arrangement (300, 900).

11. The transmission arrangement of claim 9 or 10, wherein the first shift rod (851) is configured to push the interlocking member (857) into a first lateral position as it moves the first sleeve (146) into its first position, wherein the interlocking member (857) in its first lateral position prevents the second shift rod (861) from moving the second sleeve (147) into its second position, and/or
wherein the second shift rod (861) is configured to push the interlocking member (857) into a second lateral position as it moves the second sleeve (147) into its second position, wherein the interlocking member (857) in its second lateral position prevents the first shift rod (851) from moving the first sleeve (146) into its first position.

12. The transmission arrangement of any one of the preceding claims, wherein the crawler unit (390) comprises a second planetary gear system (390) comprising a second sun gearwheel (391), a second ring gearwheel (394), and a second planet carrier (392) carrying a second set of planet gearwheels (393), preferably wherein the second planet carrier (392) is the first gear member (392) of the crawler unit (390), the second and third sleeves (147, 148) being configured to selectively rotationally connect the second planet carrier (392) to the stationary member (149a, 149b).

13. The transmission arrangement of claim 12, wherein the second ring gearwheel (394) is rotationally connected to the first planet carrier (142), and the second sun gearwheel (391) is rotationally connected to the first ring gearwheel (144).

14. A powertrain (200, 8200) for an electrically propelled vehicle (1), the powertrain (200) comprising:
- an electric motor (10), and
- the transmission arrangement (300, 900) of any one of the preceding claims, wherein the input component (132, 8132) of the transmission arrangement is drivingly connected or connectable to the electric motor (10).

15. A vehicle (1) comprising the transmission arrangement (300, 900) according to any of claims 1-13, or the powertrain (200) according to claim 14.
